Europäisches Patentamt

European Patent Office

Office européen des brevets

(19)

(11) **EP 0 576 917 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int. Cl.[7]: **G06F 11/10**

(21) Anmeldenummer: **93109630.9**

(22) Anmeldetag: **16.06.1993**

(54) **Verfahren zur Datensicherung bei Schreib-Lese-Speichern**

Method to maintain data integrity in write-read memories

Procédé de maintien de l'intégrité des données dans les mémoires écriture/lecture

(84) Benannte Vertragsstaaten:
**AT DE ES FR GB IT**

(30) Priorität: **30.06.1992 DE 4221406**

(43) Veröffentlichungstag der Anmeldung:
**05.01.1994 Patentblatt 1994/01**

(73) Patentinhaber:
**SIEMENS AKTIENGESELLSCHAFT**
**80333 München (DE)**

(72) Erfinder:
**Meyer, Heinrich, Dipl.-Ing. (FH)**
**D-8500 Nürnberg 50 (DE)**

(56) Entgegenhaltungen:
**US-A- 4 433 388        US-A- 4 947 396**
**US-A- 5 127 014        US-A- 5 263 030**

## Beschreibung

Herkömmliche Schreib-Lese-Speicher, insbesondere EEPROM-Speicher, besitzen nur eine begrenzte Anzahl von Schreibzugriffen sowie eine begrenzte Zeit für die Datenhaltung. Die Lebensdauer der Schreib-Lese-Speicher hängt außerdem stark von den Einsatzbedingungen, insbesondere von der Umgebungstemperatur ab. Von Herstellern von EEPROM-Speichern wird eine Schreibhäufigkeit von 10 000 bis 100 000 Zugriffen garantiert. Beim Überschreiten dieser Schreibzyklen muß mit Datenverfälschungen im Speicher gerechnet werden, so daß die Anwender dafür Sorge tragen müssen, daß die vom Hersteller garantierte Anzahl der Schreibzugriffe nicht überschritten wird.

Die tatsächlich mögliche Anzahl der Schreibzugriffe liegt jedoch, wie Laborversuche ergaben, um den Faktor 30 bis 300 über der Anzahl der vom Hersteller garantierten Schreibzyklen. Eine Verwendung über die garantierte Lebensdauer hinaus birgt aber die Gefahr in sich, daß es zur Verfälschung einzelner Bits im Datenspeicher kommen kann.

Es ist daher Aufgabe der Erfindung, ein Verfahren zu entwickeln mit dem die Verwendungsdauer eines Schreib-Lese-Speichers erhöht werden kann.

Diese Aufgabe wird durch ein Verfahren zur Datensicherung bei Schreib-Lese-Speichern mit der Merkmalen des Anspruchs 1 gelöst:

Da ein alternder und beanspruchter Schreib-Lese-Speicher, insbesondere ein EEPROM-Speicher, seinen gesamten Dateninhalt in der Regel nicht zu einem Zeitpunkt verliert, sondern vielmehr über einen längeren Zeitraum nur einzelne Datenbits im Speicher ihren Wert ändern, ist es sinnvoll die Daten nicht nur abzusichern, sondern einzelne Bitverfälschungen auch zu korrigieren. Dies läßt sich durch den Fehlerkorrekturcode einfach erreichen, so daß der Speicher nach der Korrektur der Daten wieder weiterverwendet werden kann. Falls jedoch der Alterungsprozeß schon soweit fortgeschritten ist, daß sich die Nutzdaten durch den Fehlerkorrekturcode nicht mehr exakt reproduzieren lassen, wird dies dem Anwender über eine Fehlermeldung signalisiert, so daß der Speicher ersetzt werden kann.

Gemäß einer vorteilhaften Ausbildung der Erfindung wird eine Fehlermeldung auch dann ausgegeben, wenn sich die Nutzdaten wieder völlig reproduzieren lassen. Diese Fehlermeldungen können dann statistisch vom Anwender erfaßt und daraus Rückschlüsse auf die Lebensdauer der Schreib-Lese-Speicher gezogen werden.

Ein Ausführungsbeispiel der Erfindung wird im folgenden anhand der Zeichnung näher beschrieben. Dabei zeigen:

FIG 1    ein mobiles Datenspeichersystem,
FIG 2    die schematische Aufteilung eines Schreib-Lese-Speichers und
FIG 3    die Zuordnung der Speicheradressen aus Anwendersicht.

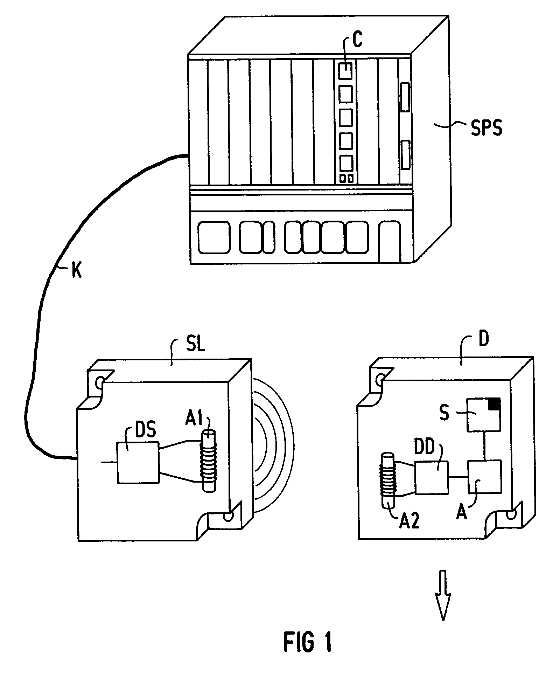

FIG 1 zeigt ein Automatisierungsgerät SPS wie es beispielsweise in speicherprogrammierbaren Steuerungen verwendet wird. Das Automatisierungsgerät SPS ist über ein Kabel K mit einem Schreib-Lese-Gerät SL verbunden. Neben dem Schreib-Lese-Gerät ist ein mobiler Datenspeicher D gezeigt, der stationär mit einem nichtgezeigten Werkstück oder auf einer Palette auf der ein Werkstück transportiert wird, angebracht ist und der - wie durch den Pfeil angedeutet - an verschiedenen Stationen an einem Schreib-Lese-Gerät SL vorbeigeführt wird.

Über das Automatisierungsgerät SPS und das Schreib-Lese-Gerät SL können die produktionsrelevanten Daten des Werkstücks zum Datenspeicher D übertragen und dort von der Antenne A2 empfangen werden. Die empfangenen Daten werden dann über den Demodulator DD an das Steuergerät A weitergegeben und von diesem in den Speicher S eingeschrieben. Der mobile Datenspeicher D durchläuft dann mit dem Werkstück verschiedene Bearbeitungsstationen und ist damit wie das Werkstück selbst den Umgebungseinflüssen dieser Bearbeitungsstationen ausgesetzt. Daher wird der im Datenspeicher D befindliche Schreib-Lese-Speicher S besonders beansprucht.

Damit das Werkstück jedoch an den Bearbeitungsstationen die im Schreib-Lese-Speicher S vorgesehenen Bearbeitungsschritte erfährt, muß sichergestellt werden, daß die Daten im Schreib-Lese-Speicher S nicht fehlerhaft sind. Zu diesem Zweck verfügt das Automatisierungsgerät SPS neben anderen Vorrichtungen - die beispielsweise für den Ablauf des Datenaustauschs sorgen und auf die hier in der Übersichtlichkeit halber nicht näher eingegangen wird - über eine Codiervorrichtung C, die sämtliche Nutzdaten N in Teilmengen aufteilt und für jede dieser Teilmengen von Nutzdaten N einen Fehlerkorrekturcode F berechnet. Jede dieser Teilmengen von Nutzdaten N und Korrekturdaten F wird dann blockweise im Speicher S des Datenspeichergerätes D abgelegt.

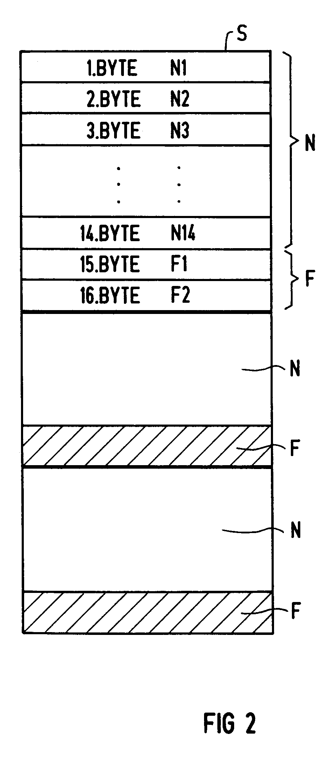

FIG 2 zeigt die schematische Darstellung des Schreib-Lese-Speichers S, der in Blöcke zu jeweils 16 Byte eingeteilt ist. Bei den ersten 14 Byte handelt es sich dabei jeweils um Nutzdaten N und bei den Bytes 15 bis 16 um Fehlerkorrekturdaten (ECC = ERROR CORECTION-CODE). Diese Fehlerkorrekturdaten werden aus den Nutzdaten nach herkömmlichen Verfahren berechnet (z.B. Swoboda, Joachim, Codierung zur Fehlerkorrektur und Fehlererkennung, R. Oldenbourg Verlag, München, Wien 1973). Beispielsweise kann als Grundlage für die Berechnung der Fehlerkorrekturdaten folgendes Generatorpolynom 16-ten Grades verwendet werden:

$$G(u) = u^{16} + u^{14} + u^{13} + u^{11} + u^{10} + u^{9} + u^{8} + u^{6} + u^{5} + u + 1$$

Das Polynom besitzt folgende Eigenschaften:

- Mindesthammingdistanz: h = 5
- Anzahl der mit h absicherbaren Codestellen: n = 255
- Anzahl der mit dem Code korrigierbaren Fehler: e = 2 (wobei die Fehler beliebig in den Codestellen verteilt sein können).

Der Anwender, der auf eine bestimmte Anzahl von Nutzdaten zugreifen will, schickt einen entsprechenden Befehl an die Codiervorrichtung C, die im Automatisierungsgerät SPS integriert ist. Aus dem Schreib-Lese-Speicher S werden dann die Blöcke, in denen sich die gewünschten Nutzdaten befinden, ausgelesen. Dazu setzt die Codiervorrichtung den Lesebefehl in eine Anzahl Befehle mit der Blocklänge 16 Byte um, woraufhin die Nutzdaten N inklusive der Fehlerkorrekturdaten F ausgelesen werden. Die Nutzdaten N werden dann mit Hilfe der Fehlerkorrekturdaten F überprüft, indem die Fehlerkorrekturdaten F aus den gelesenen Nutzdaten N neu berechnet und mit den gelesenen Fehlerkorrekturdaten F verglichen werden. Wenn durch den Vergleich eine Inkonsistenz in den Daten festgestellt wird, so wird eine Datenkorrekturprozedur eingeleitet. Dabei hängt die Anzahl der noch korrigierbaren Daten vom verwendeten Fehlerkorrekturverfahren ab. Im Ausführungsbeispiel kann beispielsweise das "Umkippen" von zwei beliebigen Datenbits pro 16 Byte-Block noch korrigiert werden. Falls 3 Bit pro 16 Byteblock verfälscht sind, werden diese noch sicher als Fehler erkannt. Mehrbitverfälschungen werden mit einer Wahrscheinlichkeit von $1{,}5 \cdot 10^{-5}$ nicht mehr erkannt.

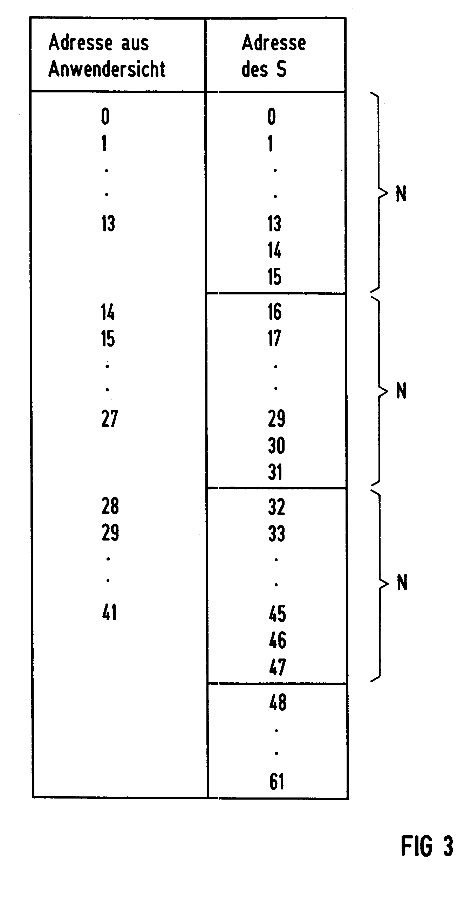

Ein Schreibbefehl des Anwenders wird von der Codiervorrichtung in der Regel mit einem Lesebefehl eingeleitet. Anschließend werden die neuen Nutzdaten des Anwenders als Byte 1 bis 14 eines Blockes an den Schreib-Lese-Speicher S übertragen. Zuletzt werden die Fehlerkorrekturdaten aus den Nutzdaten neu gebildet und ebenfalls zum Schreib-Lese-Speicher S übertragen. Die Codiervorrichtung C kann transparent zum Anwender arbeiten, d.h., daß die Fehlerkorrekturdaten F gegenüber dem Anwender nicht erscheinen, so daß der Anwender lediglich mit den Nutzdaten N zu arbeiten braucht. Dies wird anhand von FIG 3 näher ausgeführt.

In FIG 3 sind in Tabellenform die Adressen des Schreib-Lese-Speichers S aus Anwendersicht und die tatsächlichen Adressen der Speicherplätze des Schreib-Lese-Speichers S dargestellt. Dabei beinhaltet jeweils ein Block des Schreib-Lese-Speichers insgesamt 16 Bytes auf den Adressen 0 bis 15, 16 bis 31 und 32 bis 47, jeweils 14 Bytes eines Blockes stellen die Nutzdaten N und die beiden letzten Bytes eines Blockes die Fehlerkorrekturdaten F dar. Auf Seiten des Anwenders erscheinen diese Fehlerkorrekturdaten F jedoch nicht, sondern es sind vielmehr alle Nutzdaten N in aufsteigender Reihenfolge durchnumeriert. Die entsprechende Zuordnung der Adressen der Nutzdaten auf Anwenderseite zu den tatsächlichen Adressen der Nutzdaten des Schreib-Lese-Speichers S wird von der Codiervorrichtung C (FIG 1) automatisch vorgenommen. Dabei sind die Adressen 0 bis 13 noch identisch, während sich bereits die weiteren Adressen der Nutzdaten N aus Anwendersicht gegenüber den Adressen der Nutzdaten im Schreib-Lese-Speicher S verschieben.

**Patentansprüche**

1. Verfahren zur Datensicherung bei Schreib-Lese-Speichern (S) mit folgenden Merkmalen:

    1.1 Eine Codierungsvorrichtung (C) bildet jeweils aus einer Teilmenge (N) von Nutzdaten eine vorgegebene Anzahl von Fehlerkorrekturdaten (F),
    1.2 die Gesamtmenge der Nutzdaten wird blockweise im Schreib-Lese-Speicher (S) abgelegt, wobei sich ein Block aus einer Teilmenge (N) der Nutzdaten und den dieser Teilmenge zugeordneten Fehlerkorrekturdaten (F) zusammensetzt,
    1.3 bei einer Speicherabfrage von mindestens einem Nutzdatum wird der dieses Datum enthaltende Block von der Codiervorrichtung (C) gelesen, worauf die dazu gehörige Teilmenge (N) von Nutzdaten mit Hilfe der Fehlerkorrekturdaten (F) überprüft werden,
    1.4 jedes falsche Nutzdatum das eindeutig erkannt wird, wird durch die Codiervorrichtung (C) berichtigt,
    1.5 falls eine Berichtigung eines Nutzdatums nicht möglich ist, wird eine Fehlermeldung ausgegeben.

2. Verfahren nach Anspruch 1, wobei eine Fehlermeldung auch dann ausgegeben wird, wenn von der Codiervorrichtung (C) eine Berichtigung der Nutzdaten vorgenommen wurde.

**Claims**

1. Method for securing data in write-read memories (S) having the following features:

1.1 a coding device (C) forms in each case from a subset (N) of user data a specified number of error correction data items (F),

1.2 the total quantity of the user data is deposited block-by-block in the write-read memory (S), with a block being composed of a subset (N) of the user data and the error correction data (F) allocated to this subset,

1.3 in the event of a memory query of at least one user data item the block containing this data item is read by the coding device (C), whereupon the associated subset (N) of user data is examined with the aid of the error correction data (F),

1.4 each incorrect user data item which is clearly detected is corrected by the coding device (C),

1.5 if a correction of a user data item is not possible, an error message is issued.

2. Method according to claim 1, wherein an error message is also issued if a correction of the user data was made by the coding device (C).

**Revendications**

1. Procédé pour le maintien de l'intégrité de données dans des mémoires (S) d'écriture/lecture comportant les caractéristiques suivantes :

1.1 un dispositif (C) de codage forme chaque fois à partir d'une sous-quantité (N) de données utiles un nombre prescrit de données (F) de correction d'erreurs,

1.2 la quantité totale des données utiles est enregistrée par blocs dans la mémoire (S) d'écriture/lecture, un bloc se composant d'une sous-quantité (N) des données utiles et des données (F) de correction d'erreurs associées à cette sous-quanité,

1.3 lorsque l'on demande à la mémoire au moins une donné utile, le bloc contenant cette donnée est lu par le dispositif (C) de codage, après quoi la sous-quantité (N) associée de données utiles est vérifiée à l'aide des données (F) de correction d'erreurs,

1.4 chaque donnée utile fausse qui est reconnue de manière non-équivoque est corrigée par le dispositif (C) de codage,

1.5 dans le cas où une correction d'une donnée utile n'est pas possible, un message d'erreur est émis.

2. Procédé suivant la revendication 1, un message d'erreur étant aussi émis s'il a été procédé par le dispositif (C) de codage à une correction des données utiles.

FIG 1

S

| | |
|---|---|
| 1.BYTE | N1 |
| 2.BYTE | N2 |
| 3.BYTE | N3 |
| . | . |
| . | . |
| 14.BYTE | N14 |
| 15.BYTE | F1 |
| 16.BYTE | F2 |

N

F

N

F

N

F

FIG 2

| Adresse aus Anwendersicht | Adresse des S |
|---|---|
| 0 | 0 |
| 1 | 1 |
| . | . |
| . | . |
| . | . |
| 13 | 13 |
| | 14 |
| | 15 |
| 14 | 16 |
| 15 | 17 |
| . | . |
| . | . |
| 27 | 29 |
| | 30 |
| | 31 |
| 28 | 32 |
| 29 | 33 |
| . | . |
| . | . |
| 41 | 45 |
| | 46 |
| | 47 |
| | 48 |
| | . |
| | . |
| | 61 |

FIG 3